(19) Europäisches Patentamt European Patent Office Office européen des brevets

(11) **EP 2 891 268 B1**

(12) **FASCICULE DE BREVET EUROPEEN**

(45) Date de publication et mention de la délivrance du brevet:
**28.09.2016 Bulletin 2016/39**

(21) Numéro de dépôt: **14712007.5**

(22) Date de dépôt: **25.03.2014**

(51) Int Cl.:
*H04L 9/32* *(2006.01)*     *H04L 29/06* *(2006.01)*

(86) Numéro de dépôt international:
**PCT/EP2014/055969**

(87) Numéro de publication internationale:
**WO 2014/154694 (02.10.2014 Gazette 2014/40)**

(54) **SIGNATURE DE GROUPE UTILISANT UN PSEUDONYME**

GRUPPENSIGNATUR UNTER VERWENDUNG EINES PSEUDONYMS

GROUP SIGNATURE USING A PSEUDONYM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2013 FR 1352650**

(43) Date de publication de la demande:
**08.07.2015 Bulletin 2015/28**

(73) Titulaire: **Safran Identity & Security 92130 Issy-les-Moulineaux (FR)**

(72) Inventeurs:
• **PATEY, Alain**
  **F-92130 Issy les Moulineaux (FR)**
• **CHABANNE, Hervé**
  **F-92130 Issy les Moulineaux (FR)**
• **BRINGER, Julien**
  **F-92130 Issy les Moulineaux (FR)**

(74) Mandataire: **Regimbeau 20, rue de Chazelles 75847 Paris Cedex 17 (FR)**

(56) Documents cités:
**EP-A1- 1 848 143**

• **JULIEN BRINGER ET AL: "Collusion-Resistant Domain-Specific Pseudonymous Signatures", INTERNATIONAL ASSOCIATION FOR CRYPTOLOGIC RESEARCH,, vol. 20130401:132437, 31 mars 2013 (2013-03-31), pages 1-15, XP061007444,**
• **JENS BENDER ET AL: "Domain-Specific Pseudonymous Signatures for the German Identity Card", 19 septembre 2012 (2012-09-19), INFORMATION SECURITY, SPRINGER BERLIN HEIDELBERG, BERLIN, HEIDELBERG, PAGE(S) 104 - 119, XP047016711, ISBN: 978-3-642-33382-8 cité dans la demande pages 1-2 pages 11-12**
• **JULIEN BRINGER ET AL: "Backward Unlinkability for a VLR Group Signature Scheme with Efficient Revocation Check", INTERNATIONAL ASSOCIATION FOR CRYPTOLOGIC RESEARCH,, vol. 20120514:133910, 14 mai 2012 (2012-05-14), pages 1-22, XP061005783,**

## Description

### DOMAINE DE L'INVENTION

La présente invention concerne de façon générale le domaine des signatures numériques.

L'invention concerne plus précisément une nouvelle méthode de signature combinant une signature de groupe avec l'utilisation de pseudonymes, à des fins d'authentification.

Elle s'applique tout particulièrement aux documents d'identité, notamment aux documents de voyage lisibles par machine (*Machine Readable Travel Document, MRTD*) tels que les passeports ou les cartes d'identité.

### ETAT DE LA TECHNIQUE

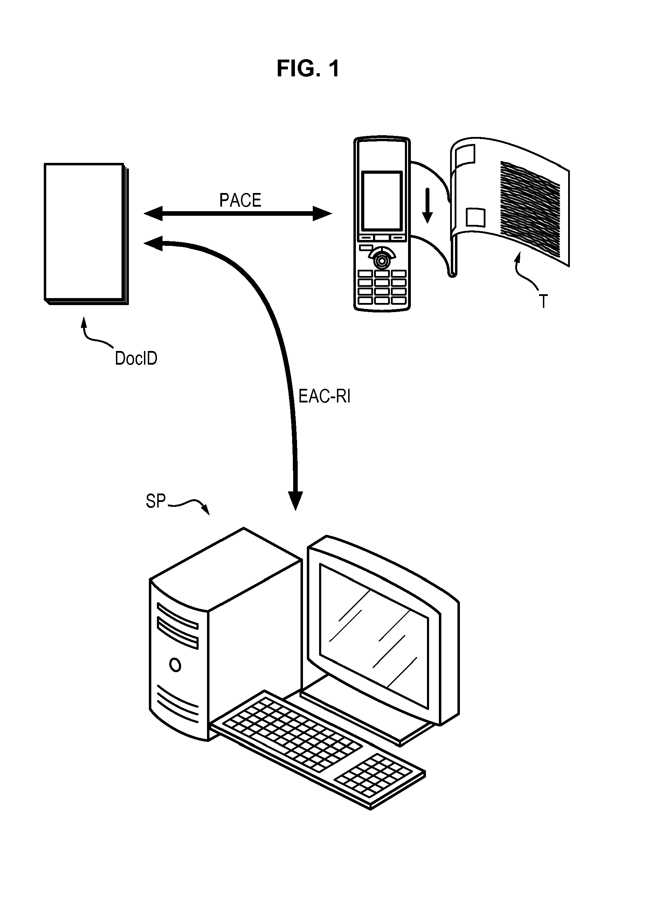

Comme illustré sur la figure 1, pour qu'un détenteur d'un document d'identité DocId de type MRTD puisse accéder à un service proposé par un fournisseur de service SP, une connexion est établie entre le document d'identité et un terminal T du fournisseur de service et divers mécanismes de sécurité sont mis en place. Parmi ces mécanismes, le protocole PACE (Password Authenticated Connection Establishment) permet d'établir un canal sécurisé entre le document d'identité et le terminal, et le protocole EAC (Extended Access Control) permet de réaliser une authentification mutuelle du document d'identité et du fournisseur de service et d'établir un autre canal sécurisé.

De plus, le protocole RI (Restricted Identification) permet de générer un pseudonyme spécifique à un document d'identité pour un domaine donné regroupant un ensemble de terminaux du fournisseur de service. Ce pseudonyme permet auxdits terminaux d'identifier le document d'identité. Par ailleurs ce protocole satisfait la propriété de « cross-domain anonymity » : il est impossible d'établir un lien entre les pseudonymes utilisés pour des domaines différents pour un même document d'identité.

Ce protocole peut être étendu à l'utilisation de tels pseudonymes pour signer numériquement un message. Une telle variante de ce protocole est décrite dans la référence Bender, J., Dagdelen, O., Fischlin, M., Kugler, D.: Domain-specific pseudonymous signatures for the german identity card. In: Gollmann, D., Freiling, F.C. (eds.) ISC. Lecture Notes in Computer Science, vol. 7483, pp. 104-119, Springer (2012*)* et propose que chaque utilisateur détienne un élément secret, dit clé de signature, généré par une autorité de gestion de clés à partir de sa propre clé secrète, et que cet élément secret soit utilisé à la fois pour signer les messages émis et pour générer le pseudonyme utilisé par cet utilisateur. Ce protocole permet de garantir que l'utilisateur possède une clé de signature valide et non révoquée, et que le pseudonyme utilisé est légitime.

Un tel protocole vérifie les trois propriétés suivantes : « unforgeability », « cross-domain anonymity » et « seclusiveness ».

La propriété d' « unforgeability » assure qu'il est impossible à quiconque de générer une signature à la place d'un détenteur d'un document d'identité.

La propriété de « seclusiveness » assure qu'il est impossible que soit générée une signature valide utilisant un pseudonyme non valide.

Néanmoins ce protocole se fonde sur l'hypothèse que les utilisateurs ne peuvent récupérer leur clé de signature, cette clé étant supposée être stockée sur une puce inviolable d'un document d'identité. En effet, la mise en commun par au moins deux utilisateurs de leurs clés de signature leur permettrait de retrouver la clé secrète de l'autorité de gestion de clés et donc de générer de nouvelles clés valides. Il existe donc un besoin de proposer un mécanisme de signature sécurisé même en cas de récupération et de mise en commun des clés de signature de plusieurs utilisateurs.

D'autre part, ce protocole suppose également que l'autorité de gestion de clés ne mémorise pas les clés de signature générées pour les utilisateurs, une fois celles-ci délivrées. En effet, la connaissance des clés par l'autorité de gestion de clés lui permettrait de les utiliser pour signer un message à la place de n'importe quel utilisateur légitime. Or, l'absence de mémorisation de ces clés par l'autorité de gestion de clés est difficile à garantir. Il existe donc également un besoin de proposer un mécanisme de signature garantissant qu'aucune autorité ne puisse signer un message à la place d'un utilisateur.

Par ailleurs, un autre mécanisme de signature connu est celui de la signature de groupe, tel que décrit dans la référence Bringer, J.Patey, A.: VLR group signatures - how to achieve both backward unlinkability and efficient revocation checks. In: SECRYPT. pp. 215-220 (2012*)*. Celui-ci permet à un membre d'un groupe de signer un message de manière anonyme au nom du groupe et de prouver l'appartenance de ce membre à ce groupe.

Il prévoit d'associer un secret de groupe à des membres d'un groupe. Il prévoit également d'associer à chaque membre du groupe une clé secrète composée d'une première partie de clé générée par le membre et d'une seconde partie de clé basée à la fois sur la première partie de clé et sur le secret de groupe. La signature d'un message ou challenge par un membre avec sa clé secrète lui permet de prouver qu'il est membre du groupe tout en restant anonyme.

Néanmoins un tel mécanisme ne permet pas à un membre du groupe d'avoir une identité dans ce groupe.

Les références suivantes décrivent également des mécanismes de signature de groupe : David Chaum, Eugène van Heyst: Group Signatures. EUROCRYPT 1991:257-265 et Dan Boneh, Hovav Shacham: Group signatures with verifier-local revocation. ACM Conference on Computer and Communications Security 2004:168-177.

Il existe donc un besoin de proposer un mécanisme de signature permettant à un membre d'un groupe de signer un message au nom du groupe, tout en ayant une identité dans le groupe, sans présenter les inconvénients des mécanismes de signature utilisant des pseudonymes cités ci-dessus.

RESUME DE L'INVENTION

A cet effet, l'invention a pour objet un procédé de signature d'un message m mis en oeuvre par des moyens de traitement d'un dispositif utilisateur d'un membre $M_i$ appartenant à un groupe de membres $\mathcal{G}$ géré par une autorité de gestion de clés, ledit dispositif utilisateur détenant une clé de signature secrète ski, comprenant une étape de génération pour le message m d'une signature de groupe $\sigma$ permettant audit membre $M_i$ de prouver son appartenance au groupe de membres $\mathcal{G}$ et une étape de génération d'un pseudonyme $nym_{ij}$ identifiant le membre $M_i$ dans un domaine $D_j$ d'un fournisseur de services $SP_j$, ledit domaine $D_j$ comprenant un ensemble de terminaux en communication avec un serveur dudit fournisseur de service, ladite signature $\sigma$ étant construite de sorte que ledit membre Mi puisse prouver en signant le message m sa connaissance de ladite clé de signature secrète sans la divulguer, et caractérisé en ce que ladite signature de groupe est construite de sorte que l'appartenance du membre au groupe soit vérifiable indépendamment du pseudonyme, et en ce que la clé de signature secrète $sk_i$ du membre $M_i$ comprend au moins une première partie de clé $f_i$ générée par les moyens de traitement du dispositif utilisateur dudit membre et inconnue de l'autorité de gestion des clés, et en ce que ledit pseudonyme et ladite signature sont fonction d'une deuxième partie xi de ladite clé de signature secrète du membre $M_i$, et sont construits de sorte à prouver que le membre identifié par le pseudonyme est le signataire du message m et en ce que ledit pseudonyme $nym_{ij}$ du membre $M_i$ est spécifique au domaine $D_j$.

Le mécanisme de signature objet de l'invention combine ainsi une signature de groupe et l'utilisation de pseudonymes, et permet au signataire de prouver son appartenance au groupe tout en ayant une identité dans ce groupe.

Avantageusement, ladite clé de signature secrète (ski) est stockée dans un moyen de stockage sécurisé pour empêcher l'accès à celle-ci par un tiers.

Dans un mode de réalisation, préalablement auxdites étapes de génération d'une signature de groupe et d'un pseudonyme, ledit procédé peut comprendre une étape de génération de clés mise en oeuvre par un serveur de gestion de clés de l'autorité de gestion de clés, au cours de laquelle, des moyens de traitement du serveur de gestion génèrent pour le groupe de membres $\mathcal{G}$ un ensemble de paramètres publics gpk, déterminent un paramètre de domaine $dpk_j$ spécifique au domaine $D_j$, et transmettent ce paramètre au fournisseur de service $SP_j$.

Avantageusement, le paramètre de domaine ($dpk_j$) est égal à $g_1{}^{rj}$, avec $r_j$ un entier et g1 un générateur d'un groupe G1, g1 étant un paramètre parmi l'ensemble de paramètres publics (gpk). Dans un mode de réalisation, l'entier $r_j$ est déterminé par l'autorité de gestion de clés.

De manière préférentielle, ledit pseudonyme $nym_{ij}$ du membre $M_i$ dans le domaine $D_j$ est fonction du paramètre de domaine $dpk_j$ spécifique au domaine $D_j$ déterminé par ledit serveur de gestion.

Notamment, le pseudonyme $nym_{ij}$ peut être égal à $dpk_j{}^{xi}$ avec xi ladite deuxième partie de clé de signature secrète du membre $M_i$ et $dpk_j$ ledit paramètre de domaine.

Ainsi, le pseudonyme d'un membre est différent dans chaque domaine et ne dévoile pas la partie de clé secrète utilisée pour le générer, ce qui permet de garantir que des pseudonymes du même membre dans deux domaines différents ne pourront être reliés.

D'autre part, ladite signature $\sigma$ peut comprendre une valeur K, différente du pseudonyme, de la forme $B^{xi}$ avec B un élément d'un groupe G1 et xi ladite deuxième partie de clé de signature secrète du membre $M_i$.

Selon une variante, les moyens de traitement du dispositif utilisateur mettent en oeuvre un algorithme de preuve à divulgation nulle de connaissance dans lequel ladite signature est générée de façon à prouver que le membre identifié par le pseudonyme ($nim_{ij}$) est le signataire du message. L'utilisation d'un algorithme à divulgation nulle de connaissance permet au signataire d'apporter la preuve de son identité sans pour autant divulguer sa clé secrète.

L'invention a également pour objet un procédé de contrôle d'une signature d'un message m et d'un pseudonyme mis en oeuvre par des moyens de traitement d'un serveur de contrôle, ladite signature $\sigma$ et ledit pseudonyme nymij étant générés selon le procédé de signature décrit précédemment, comprenant une étape de vérification, à partir de la signature $\sigma$ et du pseudonyme nymij, de la connaissance par le membre Mi de la clé de signature secrète ski et que ledit pseudonyme et ladite signature du membre Mi sont fonction d'une deuxième partie xi de ladite clé de signature secrète, de sorte à prouver que le membre identifié par le pseudonyme est le signataire du message m et qu'il appartient au groupe de membres $\mathcal{G}$ ;

Selon une variante ladite étape de vérification comprend une étape de vérification de preuve lors de laquelle les moyens de traitement du serveur de contrôle vérifient qu'une preuve à divulgation nulle de connaissance prouvant que le membre identifié par le pseudonyme est le signataire du message (m) est correcte. Ladite étape de vérification de preuve peut vérifier l'égalité des logarithmes discrets de la valeur K en base B et du pseudonyme $nym_{ij}$ en base $dpk_j$. Une telle étape prouve ainsi que le membre identifié par le pseudonyme est bien le signataire du message m sans avoir à calculer lesdits logarithmes discrets et sans révéler aucune partie de la clé de signature secrète du membre $M_i$.

Selon un mode de réalisation, ladite étape de vérification comprend une vérification de ladite signature pour prouver l'appartenance du membre (Mi) au groupe et ladite étape de vérification de preuve est réalisée lors de la vérification de ladite signature. Ainsi la vérification de la signature permet à la fois de prouver l'appartenance du signataire au groupe et de prouver que le membre identifié par le pseudonyme est bien le signataire du message.

Le procédé de contrôle peut également comprendre une étape de vérification de la révocation du membre Mi du groupe de membres $\mathcal{G}$.

Pour ce faire, les moyens de traitement du serveur de contrôle peuvent vérifier dans une base de données que le pseudonyme $nym_{ij}$ du membre Mi n'appartient pas à une liste de révocation $RL_j$ pour le domaine $D_j$, ladite liste de révocation étant construite à partir des pseudonymes $nym_{ij}$ des membres du groupe $\mathcal{G}$ révoqués par l'autorité de gestion.

L'autorité de gestion souhaitant révoquer du groupe de membres $\mathcal{G}$ un membre Mi, transmet ladite deuxième partie de clé secrète $x_i$ du membre $M_i$ au fournisseur de service $SP_j$. La liste de révocation $RL_j$ pour le domaine $D_j$ stockée dans une base de données est construite par le fournisseur de service $SP_j$ en ajoutant dans la liste de révocation $RL_j$, le pseudonyme $nym_{ij}$ du membre Mi calculé à partir de ladite deuxième partie de clé secrète reçue.

L'invention a également pour objet un programme d'ordinateur comprenant des instructions de code de programme pour l'exécution des étapes des procédés de signature et de contrôle de signature définis ci-dessus lorsque ledit programme est exécuté sur un ordinateur, un dispositif utilisateur et un serveur de contrôle comprenant au moins un moyen de stockage, un moyen de traitement et une interface de communication configurés pour mettre en oeuvre respectivement un procédé de signature et un procédé de contrôle de signature tels que définis ci-dessus ainsi qu'un système comprenant au moins un tel dispositif utilisateur et au moins un tel serveur de contrôle.

## DESCRIPTION DES FIGURES

D'autres caractéristiques et avantages ressortiront encore de la description qui suit, laquelle est purement illustrative et non limitative et doit être lue en regard des figures annexées, parmi lesquelles :

La figure 1 illustre des mécanismes de sécurité avancés pour MRTD.

La figure 2 est une représentation schématique d'un exemple de système pour la mise en oeuvre des procédés selon l'invention.

La figure 3 représente un ordinogramme illustrant les étapes génériques d'un procédé de signature selon un mode de réalisation de l'invention.

La figure 4 représente un ordinogramme illustrant les étapes d'un procédé de génération de paramètres publics selon un mode de réalisation de l'invention.

La figure 5 représente un ordinogramme illustrant les étapes d'un procédé d'adhésion à un groupe selon un mode de réalisation de l'invention.

La figure 6 représente un ordinogramme illustrant les étapes d'un procédé de signature d'un message selon un mode de réalisation de l'invention.

La figure 7 représente un ordinogramme illustrant les étapes génériques d'un procédé de signature et de contrôle de signature selon un mode de réalisation de l'invention.

La figure 8 représente un ordinogramme illustrant les étapes d'un procédé de contrôle de signature selon un mode de réalisation de l'invention.

## DESCRIPTION DETAILLEE D'AU MOINS UN MODE DE REALISATION

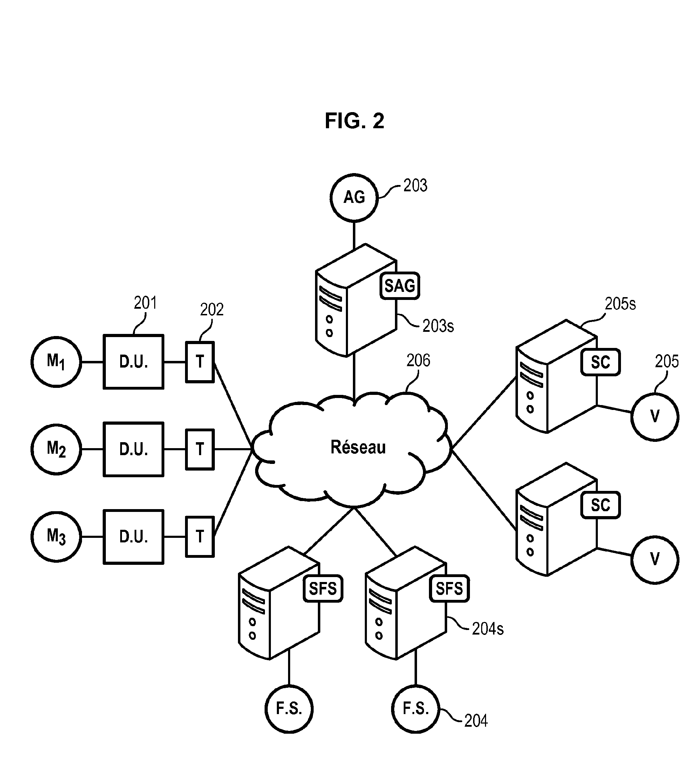

La figure 2 représente un exemple de système pour la mise en oeuvre des procédés selon l'invention.

Un tel système comprend un ensemble de dispositifs utilisateurs 201 détenus chacun par un membre Mi, (i entier) faisant partie d'un ensemble de membres constituant un groupe de membres $\mathcal{G}$, des terminaux de lecture 202, une autorité de gestion de clés 203, des fournisseurs de services 204 et des vérificateurs 205, les vérificateurs pouvant être des fournisseurs de service.

L'ensemble des dispositifs utilisateurs, les terminaux de lecture, l'autorité de gestion de clés, les fournisseurs de services et les vérificateurs sont interconnectés par le biais d'un réseau informatique 206. Un ensemble de terminaux de ce réseau en communication avec un fournisseur de service constitue un domaine.

L'autorité de gestion de clés, les fournisseurs de service et les vérificateurs peuvent être connectés à ce réseau par des serveurs respectifs comprenant une mémoire vive et des moyens de stockage tels qu'une mémoire non volatile réinscriptible (mémoire flash ou mémoire EEPROM) pouvant stocker une base de données, des moyens de traitement comportant un processeur, des unités cryptographiques pour générer notamment des nombres aléatoires, etc... et des moyens d'interface leur permettant de communiquer avec d'autres entités sur le réseau et d'être connectés à des bases de données. De tels serveurs peuvent également comprendre des moyens de saisie et d'interface utilisateur permettant leur administration. Les serveurs des entités précitées sont respectivement dénommés serveur de gestion de clés 203s, serveur de fournisseur de service 204s, et serveur de contrôle 205s dans la suite de la description.

Avantageusement, au moins deux de ces serveurs peuvent être réunis au sein d'un même dispositif informatique assurant conjointement les fonctions desdits serveurs.

Le dispositif utilisateur d'un membre $M_i$ peut comprendre un dispositif électronique portable apte à stocker des données sécurisées lisibles par un terminal de lecture.

Un dispositif électronique portable peut être un document d'identité comprenant une puce dans laquelle sont stockées des données sécurisées par exemple un document de voyage lisible par machine (*Machine Readable Travel Document, MRTD*) tel qu'un passeport ou une carte d'identité, un dispositif de stockage à mémoire flash doté d'une interface de communication USB, dite clé USB (« Universal Serial Bus »), une carte à puce etc... Le dispositif électronique portable peut comporter une mémoire vive et des moyens de stockage tels qu'une mémoire non volatile réinscriptible (mémoire flash ou mémoire EEPROM), des moyens de traitement comportant un processeur, des unités cryptographiques pour générer notamment des nombres aléatoires etc... Le dispositif électronique portable peut également comporter une interface de communication sans contact telle qu'une interface RFID ou NFC, ou bien une interface de communication sans fil telle qu'une interface Bluetooth ou Wifi.

Les données sécurisées stockées dans le dispositif électronique portable peuvent être des données biométriques. Dans ce cas, le dispositif portable peut être muni de capteurs permettant de capturer les données biométriques d'un membre Mi, telles que ses empreintes digitales, palmaires ou rétiniennes.

Un dispositif électronique portable et un terminal de lecture peuvent communiquer par le biais de communications sans fil ou sans contact telles que celles mentionnées ci-dessus. Ils peuvent également communiquer par le biais d'une interface USB, Firewire ou toute autre interface de communication filaire. Ils peuvent également communiquer par le biais d'une interface à contact de carte à puce de type ISO 7816.

Un terminal de lecture peut également comporter une interface de communication filaire ou sans fil, adaptée pour la connexion du terminal au réseau informatique, telle qu'une interface Ethernet, Wifi ou 3G ; et une interface utilisateur permettant au membre $M_i$ de contrôler son fonctionnement.

Selon une variante, un dispositif électronique portable et un terminal de lecture peuvent être réunis au sein d'un même dispositif électronique comprenant des moyens d'interface de communication et d'interface utilisateur similaires à ceux décrits ci-dessus.

Le réseau reliant les membres $M_i$ et les serveurs consiste à titre d'exemple en un réseau local Ethernet, un réseau local sans fil, le réseau Internet, un réseau de téléphonie mobile... Avantageusement, les communications sur ce réseau sont sécurisées, notamment par chiffrement des données échangées.

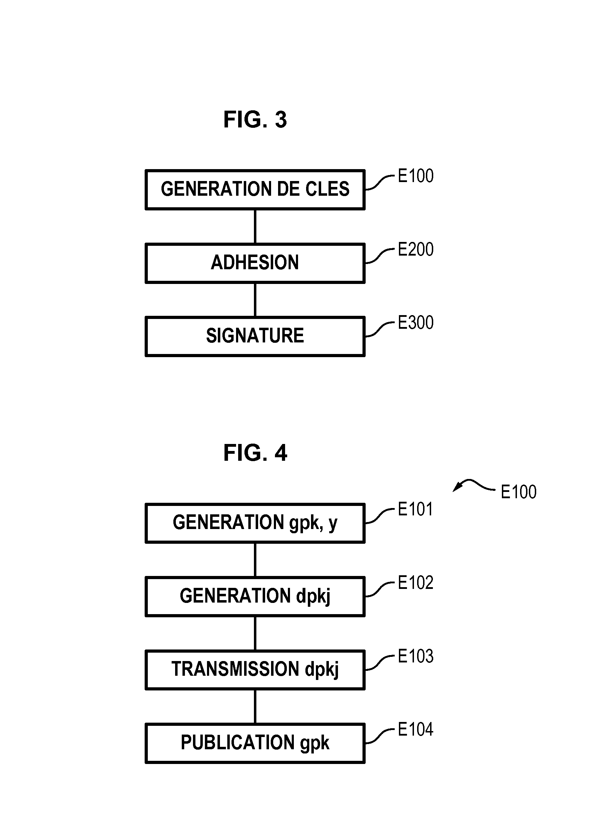

La figure 3 représente un ordinogramme illustrant les étapes génériques du procédé de signature dans un mode de réalisation de l'invention.

Le mécanisme de signature objet de l'invention combine une signature de groupe et l'utilisation de pseudonymes.

Dans un mode de réalisation préférentiel et détaillé ci-dessous le mécanisme de signature de groupe présenté est basé sur un mécanisme de signature de groupe VLR (« Verifier Local Revocation ») tel que décrit dans la référence Bringer J., Patey A.: VLR group signatures - how to achieve both backward unlinkability and efficient revocation checks. In: SECRYPT. pp. 215-220 (2012).

Le procédé de signature selon l'invention peut comprendre une étape E100 de génération de clé, une étape E200 d'adhésion au groupe et une étape E300 de signature, décrites dans les paragraphes suivants.

On note :

G$_1$, G$_2$, G$_T$ des groupes bilinéaires d'ordre premier p (p étant codé sur k bits) tel que (p-1)/2 soit un nombre premier,
q un nombre premier,
e un couplage de G$_1$ x G$_2$ dans G$_T$ c'est-à-dire une forme bilinéaire et non dégénérée de G$_1$ x G$_2$ dans G$_T$,
g$_1$ et g$_2$ des générateurs de G$_1$ et G$_2$,

Par ailleurs, la notation '‖' représente l'opération de concaténation.

Le procédé de signature peut comporter une première étape E100 de génération de clé mise en oeuvre par le serveur de gestion de clés 203s, représentée en Figure 4. Selon un mode de réalisation, au cours d'une étape E101 les moyens de traitement du serveur de gestion génèrent pour le groupe un ensemble de paramètres publics gpk et un secret de groupe $\gamma$. Au cours d'une étape E102, le serveur de gestion détermine de manière aléatoire un paramètre de domaine dpk$_j$ et le transmet au cours d'une étape E103 via ses moyens d'interface au serveur du fournisseur de service SP$_j$ 204 appartenant à un domaine D$_j$. Les paramètres publics gpk sont rendus publics au cours d'une étape E104. Selon une variante, le paramètre de domaine dpk$_j$ est également rendu public.

Plus précisément, dans un mode de réalisation de l'invention, au cours de cette étape E100, les moyens de traitement du serveur de gestion de clés :

- déterminent les groupes bilinéaires d'ordre premier G$_1$, G$_2$, G$_T$, le nombre premier q et le couplage e.

- déterminent une fonction de hachage H de {0, 1}* vers $Z_p$
- déterminent $\widetilde{g_1}$,, $\widehat{g_1}$ appartenant à $G_1$
- déterminent le secret de groupe $\gamma$ appartenant à $Z_p^*$
- calculent w = $g_2^{\gamma}$
- calculent $T_1 = e(g_1, g_2)$, $T_2 = e(\widetilde{g_1}, g_2)$, $T_3 = e(\widehat{g_1}, g_2)$ et $T_4 = e(\widehat{g_1}, w)$

À partir de ces éléments, le serveur de gestion de clés peut générer l'ensemble de paramètres publics gpk = ($G_1$, $G_2$, $G_T$, e, p, $g_1$, $g_2$, $\widetilde{g_1}$, $\widehat{g_1}$, w, H, $T_1$, $T_2$, $T_3$, $T_4$).

Le secret de groupe ne fait ainsi pas partie des paramètres publics gpk, et n'est détenu que par l'autorité de gestion. La difficulté à mettre en oeuvre l'algorithme du logarithme discret pour un groupe $G_2$ bien choisi permet de garantir l'impossibilité pratique de retrouver le secret de groupe $\gamma$ à partir de w. Ainsi la diffusion de w dans l'ensemble de paramètres publics gpk ne pose aucun problème de sécurité du mécanisme de signature et w sera utilisé pour vérifier l'appartenance au groupe du signataire d'un message.

Au cours de l'étape E102, pour chaque fournisseur de service $SP_j$, le serveur de gestion des clés génère un paramètre de domaine $dpk_j$, spécifique au domaine $D_j$. Ce paramètre peut être fonction d'un nombre $r_j$ entier. A titre d'exemple ce paramètre peut être égal à $g_1^{r_j}$. L'entier $r_j$ peut avantageusement être généré aléatoirement par le serveur de gestion à l'aide de son unité cryptographique. Le serveur de gestion transmet ensuite ce paramètre via ses moyens d'interface au serveur du fournisseur de service $SP_j$.

Les paramètres publics gpk et le cas échéant le paramètre de domaine $dpk_j$ peuvent être rendus publics de diverses manières. Ils peuvent être envoyés aux dispositifs utilisateurs 201 et aux serveurs de contrôle 205s par les fournisseurs de service ou publiés sur un site des fournisseurs de service.

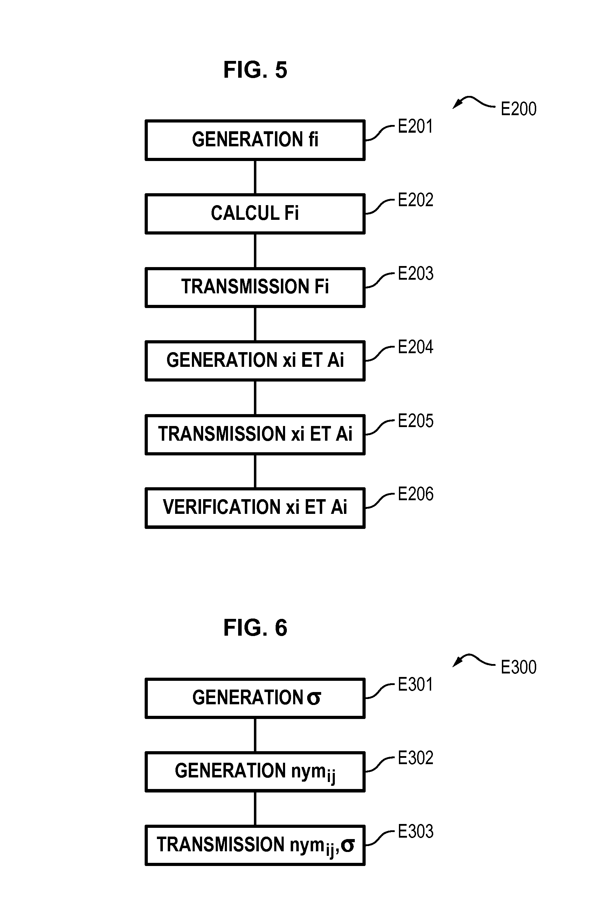

Le procédé de signature peut comporter également selon un mode de réalisation de l'invention une seconde étape E200 dite d'adhésion au groupe consistant à créer une clé de signature secrète pour un nouveau membre adhérant au groupe, décrite en Figure 5. Cette étape peut être mise en oeuvre lorsqu'un détenteur d'un dispositif utilisateur 201 souhaite devenir membre $M_i$, i entier, du groupe $\mathcal{G}$ géré par l'autorité de gestion de clés 203 jouant le rôle de gestionnaire de groupe.

Selon un mode de réalisation, ce membre peut générer lors d'une étape E201 à l'aide des moyens de traitement de son dispositif électronique portable une première partie de clé inconnue de l'autorité de gestion de clés, transmettre lors d'une étape E203 une donnée d'identité, calculée lors d'une étape E202 par ces moyens de traitement à partir de cette première partie de clé, au serveur de gestion de clés 203s et prouver à l'autorité de gestion de clés à l'aide de cette donnée d'identité qu'il détient la première partie de clé par un algorithme de preuve à divulgation nulle de connaissance (« Zero knowledge proof »). Le serveur de gestion de clés génère alors lors d'une étape E204 et transmet ensuite au membre $M_i$ lors d'une étape E205 la partie de clé manquante formant avec la première partie de clé la clé de signature du membre $M_i$.

Plus précisément, dans un mode de réalisation de l'invention, au cours de cette étape E200 :

- Le serveur de gestion de clés transmet au dispositif utilisateur du membre $M_i$ via ses moyens d'interface un nombre $n_i$ déterminé aléatoirement appartenant à $\{0, 1\}^k$.
- Les moyens de traitement du dispositif utilisateur du membre $M_i$ déterminent une première partie de clé $f_i$ appartenant à $Z_p$ et calculent des données d'identité $F_i = \widetilde{g_1}^{f_i}$.
- Les moyens de traitement du dispositif utilisateur du membre $M_i$ déterminent aléatoirement un nombre $r_f$ appartenant à $Z_p$ et calculent $R = \widetilde{g_1}^{r_f}$, c = H(gpk $\| F_i \| R \| n_i$) puis $s_f = r_f + c f_i$.
- Le dispositif utilisateur du membre $M_i$ transmet $F_i$, c et $s_f$ au serveur de gestion de clés.
- Les moyens de traitement du serveur de gestion de clés calculent $R' = \widetilde{g_1}^{s_f} \times F_i^{-c}$, comparent c et H(gpk $\| F_i \| R' \| n_i$) et vérifient que $s_f$ appartient à $Z_p$. Si cette comparaison est positive, le membre $M_i$ a bien apporté à l'autorité de gestion la preuve qu'il détient la première partie de clé $f_i$ sans la divulguer.
- Si la comparaison est positive, les moyens de traitement du serveur de gestion de clés déterminent une seconde partie de clé $x_i$ appartenant à $Z_p$ et calculent une troisième partie de clé $A_i = (g_1 F_i)^{1/(x_i + \gamma)}$.
- Les moyens d'interface du serveur de gestion de clés transmettent les seconde et troisième parties de clé, $x_i$ et $A_i$ au membre $M_i$ en utilisant un canal de préférence sécurisé.
- De manière optionnelle, $M_i$ vérifie que $e(A_i, w g_2^{x_i}) = e(g_1 \widetilde{g_1}^{f_i}, g_2)$ lors d'une étape E206.

Ainsi, $A_i$ qui constitue la troisième partie de clé est fonction du secret de groupe et permet au membre de prouver qu'il fait partie du groupe.

De plus, dans un tel mode de réalisation, le membre $M_i$ est le seul à connaître l'intégralité de sa clé de signature constituée des première, deuxième et troisième parties de clé. Personne, pas même l'autorité de gestion de clés ne peut de ce fait signer un message à la place du membre.

La dernière vérification optionnelle permet au membre de vérifier que le couple de seconde et troisième parties de clé (Ai, xi) qui lui a été transmis n'a pas été corrompu et est valide, c'est-à-dire vérifie l'équation $A_i = (g_1 Fi)^{1/(xi+\gamma)}$.

La clé de signature du membre $M_i$ peut être stockée dans des moyens de stockage sécurisés du dispositif utilisateur appartenant au membre $M_i$, avantageusement dans la mémoire non volatile du dispositif électronique portable correspondant.

De même la deuxième et la troisième parties de clé peuvent être stockées par le serveur de gestion de clés, avantageusement au sein d'une base de données enregistrée dans les moyens de stockage du serveur de gestion de clés ou bien connectée à celui-ci.

Selon une variante de l'invention, la première partie de clé fi est calculée à partie d'une donnée biométrique du membre $M_i$ capturée par les capteurs du dispositif électronique portable ou bien mémorisée par celui-ci. La première partie de clé $f_i$ peut également être le résultat de l'application par les moyens de traitement du dispositif électronique portable d'une fonction de hachage à une telle donnée biométrique.

De façon optionnelle, lors de l'exécution de cette étape d'adhésion à un groupe, l'autorité de gestion envoie le résultat du couplage $e(A_i, g_2)$ au membre $M_i$ pour éviter que celui-ci ait à prendre en charge le calcul d'un couplage par la suite lors du calcul de la signature.

Le procédé de signature comprend une troisième étape E300 de signature d'un message m, décrite en Figure 6. Le message m peut être un défi (« challenge ») transmis préalablement par un serveur de contrôle 205s au membre $M_i$ ou bien n'importe quel type de message à signer par le membre $M_i$. Avantageusement, on transmet également au membre Mi le paramètre de domaine dpkj, si celui-ci n'a pas été rendu public ou n'est pas déjà connu dudit membre.

Cette étape permet de générer lors d'une étape E301 pour le message m une signature de groupe permettant de prouver l'appartenance du membre au groupe de manière anonyme et d'y associer lors d'une étape E302 un pseudonyme $nym_{ij}$ identifiant le membre $M_i$. Ledit pseudonyme et ladite signature sont fonction d'une partie de ladite clé de signature secrète du membre $M_i$, et sont construits de sorte à prouver que le membre identifié par le pseudonyme est le signataire du message m. De plus, ledit pseudonyme $nym_{ij}$ du membre $M_i$ est spécifique au domaine $D_j$.

Avantageusement, les moyens de traitement du dispositif utilisateur mettent en oeuvre un algorithme de preuve à divulgation nulle de connaissance dans lequel la signature est générée de façon à prouver que le membre identifié par le pseudonyme $nym_{ij}$ est le signataire du message m.

Plus précisément, dans un premier mode de réalisation de l'invention, au cours de cette étape E300 les moyens de traitement du dispositif utilisateur 201 du membre $M_i$ :

- Déterminent B appartenant à $G_1$ et calculent J = $B^{fi}$, K = $B^{xi}$.
- Déterminent a appartenant à $Z_p$ et calculent b = a $x_i$ et T = $A_i \widehat{g_1}^{-a}$ =
- Déterminent $r_f$, $r_x$, $r_a$, $r_b$, $r_{x2}$, appartenant à $Z_p$.
- Calculent $R_1 = B^{rf}$, $R_2 = B^{rx}$, $R_4 = K^{ra}B^{-rb}$, $R_3 = e(T,g_2)^{-rx} T_2^{rf}T_3^{rb}T_4^{ra}$, $R_5 = dpk_j^{rx2}$, $R_6 = B^{rx2}$
- Calculent c = H(gpk ‖ B ‖ J ‖ K ‖ T ‖ $R_1$ ‖ $R_2$ ‖ $R_3$ ‖ $R_4$ ‖ m) et d = H(gpk ‖ B ‖ K ‖ $dpk_j$ ‖ $nym_{ij}$ ‖ $R_5$ ‖ $R_6$)
- Calculent $s_f = r_f + c f_i$, $s_x = r_x + c x_i$, $s_a = r_a + c a$, $s_b = r_b + c b$, $s_{x2} = r_{x2} + d x_i$.

Le membre Mi possède alors la signature du message : σ = (B, J, K, T, c, $s_f$, $s_x$, $s_a$, $s_b$, d, $s_{x2}$) et un pseudonyme $nym_{ij} = dpk_j^{xi}$. Les éléments B, J, K, T, c, $s_f$, $s_x$, $s_a$ et $s_b$ de la signature peuvent être utilisés pour vérifier l'appartenance du membre au groupe indépendamment du pseudonyme. La signature peut donc être utilisée de manière anonyme. Par ailleurs, le pseudonyme et les éléments B, K, d et $s_{x2}$ de la signature peuvent être utilisés pour prouver que la même clé secrète a été utilisée pour générer le pseudonyme et la signature, et ainsi prouver que le membre identifié par le pseudonyme $nym_{ij}$ est le signataire du message m.

Dans un deuxième mode de réalisation, au cours de cette étape E300, les moyens de traitement du dispositif utilisateur 201 du membre $M_i$ :

- Déterminent B appartenant à $G_1$ et calculent J = $B^{fi}$, K = $B^{xi}$.
- Déterminent a appartenant à $Z_p$ et calculent b = a $x_i$ et T = $A_i \widehat{g_1}^{-a}$
- Déterminent $r_f$, $r_x$, $r_a$, $r_b$, appartenant à $Z_p$.
- Calculent $R_1 = B^{rf}$, $R_2 = B^{rx}$, $R_4 = K^{ra}B^{-rb}$, $R_3 = e(T,g_2)^{-rx} T_2^{rf}T_3^{rb}T_4^{ra}$, $R_5 = dpk_j^{rx}$.
- Calculent c = H(gpk ‖ B ‖ J ‖ K ‖ T ‖ $R_1$ ‖ $R_2$ ‖ $R_3$ ‖ $R_4$ ‖ $R_5$ ‖ m).
- Calculent $s_f = r_f + c f_i$, $s_x = r_x + c x_i$, $s_a = r_a + c a$, $s_b = r_b + c b$.

Le membre Mi possède alors la signature du message : σ = (B, J, K, T, c, $s_f$, $s_x$, $s_a$, $s_b$) et un pseudonyme $nym_{ij} = dpk_j^{xi}$ lui permettant de s'identifier dans le groupe. La signature σ et l'élément $R_5$ peuvent être utilisés pour vérifier l'appartenance du membre au groupe indépendamment du pseudonyme, et donc de manière anonyme. Par ailleurs, la signature et le pseudonyme peuvent être utilisés pour prouver que le membre identifié par le pseudonyme $nym_{ij}$ est le signataire du message m. Alternativement, la signature et le pseudonyme peuvent être utilisés pour prouver en une seule opération de vérification l'appartenance du membre au groupe et que le membre identifié par le pseudonyme $nym_{ij}$ est le signataire du message m, comme détaillé ci-dessous.

Le pseudonyme du membre $M_i$ dans le domaine $D_j$ étant formé à partir du paramètre de domaine $dpk_j$ spécifique au domaine Dj, le membre $M_i$ aura des pseu-

donymes différents dans des domaines distincts. Il est alors impossible pour les fournisseurs de service 204 ou vérificateurs 205 de déterminer si deux messages dans deux domaines distincts présentant des signatures et des pseudonymes différents ont été signés par le même membre (« cross-domain unlinkability »).

Toutefois, pour préserver la propriété d'unlinkability, les fournisseurs de service et vérificateurs ne doivent pas avoir connaissance des $r_j$. En effet, à partir de $r_j$ et d'un pseudonyme $nym_{ij} = dpk_j{}^{xi}$ avec $dpk_j = g_1{}^{r_j}$, $g_1{}^{xi}$ peut être retrouvé. Ainsi en connaissant deux $r_j$ utilisés pour générer les paramètres de domaine de deux domaines distincts, un fournisseur de service ou un vérificateur pourrait déterminer si deux pseudonymes dans ces domaines correspondent au même membre.

La signature $\sigma$ est construite de sorte que le membre Mi puisse prouver en signant un message ou challenge qu'il a connaissance de la clé de signature secrète $sk_i = (f_i, x_i, A_i)$ sans la divulguer, avantageusement par un algorithme de preuve à divulgation nulle de connaissance, et donc prouver son appartenance au groupe.

De plus, par construction, xi, qui constitue une seconde partie de clé de signature secrète est utilisé à la fois pour le calcul de la signature du message m et pour générer le pseudonyme utilisé par le membre $M_i$. Ceci permet de les lier et ainsi de pouvoir prouver à partir de la signature et du pseudonyme que le membre $M_i$ connait la seconde partie de clé $x_i$ sans dévoiler cette dernière et que le membre identifié par le pseudonyme construit à partir de cette seconde partie de clé xi est bien le signataire légitime du message m.

Afin de limiter l'utilisation des ressources du dispositif utilisateur du membre $M_i$, l'autorité de gestion 203 peut envoyer, lors de l'exécution de l'étape d'adhésion au groupe E200, le résultat du couplage $e(A_i, g_2)$ au membre $M_i$ afin que celui-ci n'ait pas à prendre en charge le calcul de ce couplage lors du calcul de $R_3$. En effet,

$$e(T_2, g_2) = e(A_i, g_2)\, e(\widehat{g_1}, g_2)^a.$$ Connaissant

$e(A_i, g_2)$ et $\widehat{\mathcal{G}}$ le membre $M_i$ n'a plus ainsi que des exponentiations et des multiplications à calculer.

De même, avantageusement, tous les calculs effectués lors de cette étape de signature peuvent être réalisés hors ligne avant la réception du message m à signer, à l'exception du calcul de hachage et des exponentiations de $R_5$ et $nym_{ij}$. Ceci permet de limiter le temps de signature d'un message et les ressources nécessaires à celle-ci. Selon une variante, il est également possible de calculer à l'avance, $R_5$ et $nym_{ij}$ pour chacun des fournisseurs de service si les paramètres de domaine $dpk_j$ ont été préalablement acquis par le membre $M_i$ et si la mémoire nécessaire pour stocker les résultats de ces calculs est disponible.

A l'issue de cette étape de signature, le dispositif utilisateur 201 du membre Mi transmet lors d'une étape E303 par ses moyens d'interface de communication la signature $\sigma$ obtenue, le pseudonyme correspondant au membre $M_i$, et l'élément $R_5$ dans le deuxième mode de réalisation, au serveur de contrôle 205s qui lui a envoyé le challenge à signer, ou bien au destinataire du message m auquel il envoie également le message m.

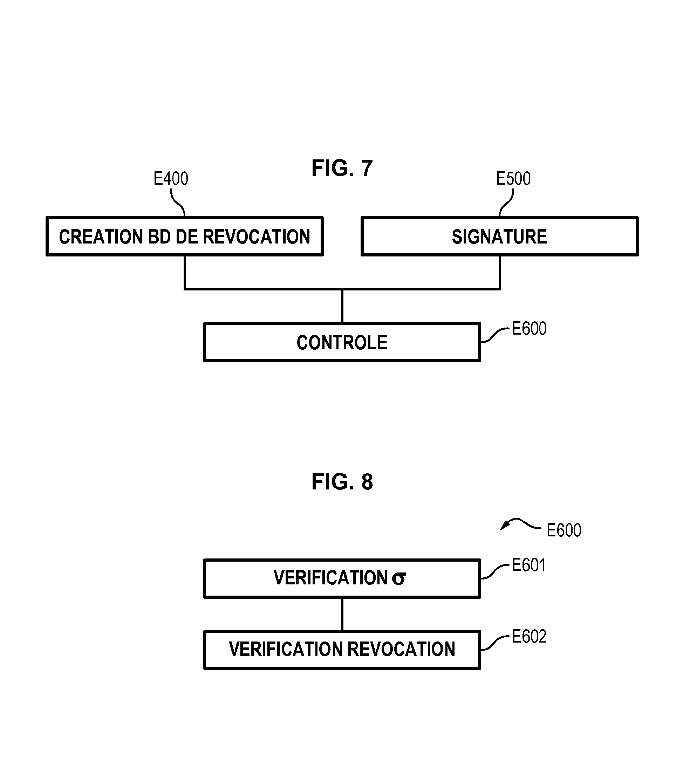

L'invention concerne également un procédé de signature et de contrôle de signature dont un mode de réalisation est décrit en Figure 7 et qui peut comprendre des étapes de création d'une base de données de révocation E400, une étape E500 de mise en oeuvre du procédé de signature illustrée en Figure 3 et une étape E600 de contrôle de signature, les étapes E400 et E600 étant décrites ci-dessous.

Des membres pouvant adhérer au groupe ou le quitter à des instants différents ou bien des membres pouvant perdre leur capacité de signature, un mécanisme de révocation peut être mis en place lors de l'étape E400. Une liste de révocation peut être établie pour chaque domaine et mise à jour par l'autorité de gestion 203. Pour ce faire, une liste de révocation $RL_j$ pour le domaine Dj est construite à partir des pseudonymes $nym_{ij}$ de membres du groupe révoqués et stockée dans une base de données de révocation $BD_j$. Selon un mode de réalisation de l'invention, lorsque l'autorité de gestion souhaite révoquer un membre $M_i$ du groupe, le serveur de gestion 203s transmet à chaque serveur 204s du fournisseur de service $SP_j$, la seconde partie de clé secrète $x_i$ du membre, et chaque serveur du fournisseur de service $SP_j$ calcule les pseudonymes $nym_{ij}$ correspondants et les ajoute dans la liste de révocation $RL_j$ de la base de données de révocation $BD_j$.

Comme illustré sur la Figure 8, le procédé de contrôle de signature E600 comprend une première étape E601 de vérification consistant à contrôler, à partir de la signature $\sigma$ et du pseudonyme $nym_{ij}$, que le membre Mi a connaissance de la clé de signature secrète $sk_i =$ $(f_i, x_i, A_i)$, c'est-à-dire qu'il est un membre légitime du groupe, et que le pseudonyme et la signature du membre Mi sont liés, c'est-à-dire que ledit pseudonyme et ladite signature du membre Mi sont fonction d'une partie de ladite clé de signature secrète. Si cette vérification est positive, le pseudonyme reçu avec la signature est bien celui du signataire.

Selon un mode de réalisation, ladite étape de vérification comprend une étape de vérification de preuve lors de laquelle les moyens de traitement du serveur de contrôle vérifient qu'une preuve à divulgation nulle de connaissance prouvant que le membre identifié par le pseudonyme est le signataire du message (m) est correcte.

Avantageusement, ladite étape de vérification de preuve vérifie l'égalité des logarithmes discrets de la valeur $K = B^{xi}$ en base B et du pseudonyme $nym_{ij} = dpk_j{}^{xi}$ en base $dpk_j$.

L'appartenance du signataire au groupe est vérifiable indépendamment du pseudonyme et la vérification que la preuve que le membre identifié par le pseudonyme est le signataire du message est correcte est réalisée par des opérations distinctes à partir de la signature et du pseudonyme.

Selon une variante du deuxième mode de réalisation, ladite étape de vérification peut comprendre une opération de vérification de ladite signature permettant de prouver à la fois l'appartenance du membre (Mi) au groupe et que le membre identifié par le pseudonyme est le signataire du message.

Le procédé de contrôle E600 peut également comprendre une seconde étape E602 de vérification de révocation consistant à vérifier que le membre Mi n'a pas été révoqué du groupe.

Plus précisément, dans le premier mode de réalisation de l'invention, lors de l'étape E601, les moyens de traitement d'un serveur de contrôle 205s :

- Vérifient que B, J, K, T appartiennent à $G_1$ et que $s_f, s_x, s_a, s_b, s_{x2}$ appartiennent à $Z_p$.
- Calculent $R'_2 = B^{s_x} K^{-c}$, $R'_3 = e(T, g_2)^{-s_x} T_2^{s_f} T_3^{s_b} T_4^{s_a} T_1^c\, e(T, w)^{-c}$, $R'_4 = K^{s_a} B^{-s_b}$, $R'_1 = B^{s_f} J^{-c}$, $R'_5 = dpk_j^{s_{x2}} nym_{ij}^{-d}$ et $R'_6 = B^{s_{x2}} K^{-d}$.
- Vérifient que $c = H(gpk \parallel B \parallel J \parallel K \parallel T \parallel R'_1 \parallel R'_2 \parallel R'_3 \parallel R'_4 \parallel m)$ et que $d = H(gpk \parallel B \parallel K \parallel dpk_j \parallel nym_{ij} \parallel R'_5 \parallel R'_6)$.

Dans ce mode de réalisation la vérification de l'égalité entre c et $H(gpk \parallel B \parallel J \parallel K \parallel T \parallel R'_1 \parallel R'_2 \parallel R'_3 \parallel R'_4 \parallel m)$ permet de prouver l'appartenance du membre au groupe indépendamment du pseudonyme. Par ailleurs, la vérification de l'égalité entre d et $H(gpk \parallel B \parallel K \parallel dpk_j \parallel nym_{ij} \parallel R'_5 \parallel R'_6)$ permet de prouver que la même clé secrète a été utilisée pour générer le pseudonyme et la signature.

Dans le deuxième mode de réalisation de l'invention, lors de l'étape E601, les moyens de traitement d'un serveur de contrôle 205s :

- Vérifient que B, J, K, T appartiennent à $G_1$ et que $s_f, s_x, s_a, s_b$ appartiennent à $Z_p$.
- Calculent $R'_2 = B^{s_x} K^{-c}$, $R'_3 = e(T, g_2)^{-s_x} T_2^{s_f} T_3^{s_b} T_4^{s_a} T_1^c\, e(T, w)^{-c}$ et $R'_4 = K^{s_a} B^{-s_b}$, $R'_1 = B^{s_f} J^{-c}$.
- Vérifient que $c = H(gpk \parallel B \parallel J \parallel K \parallel T \parallel R'_1 \parallel R'_2 \parallel R'_3 \parallel R'_4 \parallel R_5 \parallel m)$.

Dans ce mode de réalisation la vérification de l'égalité entre c et $H(gpk \parallel B \parallel J \parallel K \parallel T \parallel R'_1 \parallel R'_2 \parallel R'_3 \parallel R'_4 \parallel R_5 \parallel m)$ permet de prouver l'appartenance du membre au groupe de manière anonyme indépendamment du pseudonyme.

A partir du pseudonyme, les moyens de traitement d'un serveur de contrôle 205s calculent ensuite $R'_5 = dpk_j^{s_x} nym_{ij}^{-c}$ et vérifient que $c = H(gpk \parallel B \parallel J \parallel K \parallel T \parallel R'_1 \parallel R'_2 \parallel R'_3 \parallel \parallel R'_4 \parallel R'_5 \parallel m)$. Cette vérification permet de prouver que la même clé secrète a été utilisée pour générer le pseudonyme et la signature, et donc que le membre identifié par le pseudonyme est bien le signataire du message.

Selon une variante de ce deuxième mode de réalisation de l'invention, lors de l'étape E601, les moyens de traitement d'un serveur de contrôle 205s :

- Vérifient que B, J, K, T appartiennent à $G_1$ et que $s_f, s_x, s_a, s_b$ appartiennent à $Z_p$.
- Calculent $R'_2 = B^{s_x} K^{-c}$, $R'_3 = e(T, g_2)^{-s_x} T_2^{s_f} T_3^{s_b} T_4^{s_a} T_1 c\, e(T, w)^{-c}$, $R'_4 = K^{s_a} B^{-s_b}$, $R'_1 = B^{s_f} J^{-c}$ et $R'_5 = dpk_j^{s_x} nym_{ij}^{-c}$
- Vérifient que $c = H(gpk \parallel B \parallel J \parallel K \parallel T \parallel R'_1 \parallel R'_2 \parallel R'_3 \parallel R'_4 \parallel R'_5 \parallel m)$.

Dans cette variante la vérification de l'égalité entre c et $H(gpk \parallel B \parallel J \parallel K \parallel T \parallel R'_1 \parallel R'_2 \parallel R'_3 \parallel R'_4 \parallel R'_5 \parallel m)$ permet à la fois de prouver l'appartenance du membre au groupe et de prouver que la même clé secrète a été utilisée pour générer le pseudonyme et la signature.

Ainsi, dans tous les modes de réalisation décrits, un vérificateur peut contrôler l'appartenance du signataire du message au groupe sans connaitre le secret de groupe et identifier le signataire par son pseudonyme. Le vérificateur peut également contrôler que le pseudonyme fourni avec la signature identifie bien le signataire.

Dans un mode de réalisation de l'invention, lors de l'étape E602 les moyens de traitement du serveur de contrôle vérifient dans la base de données de révocation $BD_j$ que le pseudonyme $nym_{ij}$ n'appartient pas à la liste de révocation $RL_j$.

Si les deux étapes de vérifications E601 et E602 sont positives, alors la signature et le pseudonyme sont considérés comme valides.

Pour vérifier la signature d'un message m et le pseudonyme du membre $M_i$, le serveur de contrôle n'a besoin que de connaitre cette signature et ce pseudonyme ainsi que les paramètres de domaine $dpk_j$ et les paramètres publics gpk. Le serveur de contrôle n'a notamment pas connaissance de la clé de signature secrète du membre $M_i$. Aucun serveur de contrôle ne peut de ce fait signer un message à la place du membre, ni connaitre le pseudonyme du membre $M_i$ dans plusieurs domaines et relier les signatures et pseudonymes de ce membre pour différents domaines. De ce fait, et de par la construction des pseudonymes : quand on observe deux pseudonymes pour deux domaines différents, il est impossible, grâce à des hypothèses de complexité de certains problèmes mathématiques, de dire s'ils correspondent ou non au même membre.

D'autre part, la liste de révocation n'est pas prise en compte lors de la signature. Cela permet de ne pas avoir à renouveler les clés des membres valides après une révocation d'un membre et n'implique pas de calculs supplémentaires pour le signataire.

De plus, lors de la deuxième étape de vérification, les moyens de traitement du serveur de contrôle n'ont qu'un test d'appartenance à une liste à réaliser et non un nombre linéaire d'opérations arithmétiques comme dans les mécanismes de signature de groupe connus.

Selon une variante de l'invention, on utilise des listes de membres valides au lieu de listes de révocation. Lors de la deuxième étape de vérification, le serveur de contrôle doit alors vérifier que le pseudonyme qu'il vérifie appartient bien à la liste de membres valides.

Avantageusement les bases de données de stockage de ces listes sont stockées sur les serveurs des fournisseurs de service. Selon une variante, les listes sont mémorisées dans une base de données commune stockée sur le serveur de gestion des clés.

Ainsi l'objet de l'invention permet de construire des signatures utilisant des pseudonymes et permettant à un membre d'un groupe de signer un message au nom du groupe, tout en ayant une identité dans le groupe, sans présenter les inconvénients des mécanismes de signature utilisant des pseudonymes.

En effet ce mécanisme de signature est sécurisé même en cas de récupération et de mise en commun de clés de signature par des membres du groupe et peut garantir également que personne y compris l'autorité de gestion de clés ne puisse signer un message à la place d'un membre du groupe.

Le mécanisme de signature objet de l'invention peut être appliqué pour réaliser par exemple des authentifications biométriques anonymes tels que décrites dans la référence Bringer, J. Chabanne, H. Pointcheval, D. Zimmer, S. An application of the Boneh and Shacham group signature scheme to biometric authentication. In: Matsuura, K., Fujisaki, E. (eds.) IWSEC. Lecture Notes in Computer Science, vol. 5312, pp. 219-230. Springer (2008*)* et peut être fondé sur des signatures de groupe de type « Backward Unlinkability » comme décrit dans la référence Bringer, J., Patey, A. VLR group signatures - how to achieve both backward unlinkability and efficient revocation checks. In: SECRYPT. pp. 215-220 (2012*)* et dans la référence Nakanishi, T., Funabiki, N.: A short verifier-local revocation group signature scheme with backward unlinkability. In: Yoshiura, H., Sakurai, K., Rannenberg, K., Murayama, Y., ichi Kawamura, S. (eds.) IWSEC. Lecture Notes in Computer Science, vol. 4266, pp. 17-32. Springer (2006*).*

**Revendications**

1. Procédé de signature d'un message (m) mis en oeuvre par des moyens de traitement d'un dispositif utilisateur d'un membre (Mi) appartenant à un groupe de membres ($\mathcal{G}$) géré par une autorité de gestion de clés, ledit dispositif utilisateur détenant une clé de signature secrète (ski),
comprenant une étape de génération (E301) pour le message (m) d'une signature de groupe ($\sigma$) permettant audit membre (M$_i$) de prouver son appartenance au groupe de membres ($\mathcal{G}$) et une étape de génération (E302) d'un pseudonyme (nym$_{ij}$) identifiant le membre (M$_i$) dans un domaine (D$_j$) d'un fournisseur de services (SP$_j$), ledit domaine comprenant un ensemble de terminaux en communication avec un serveur dudit fournisseur de service,
ladite signature de groupe ($\sigma$) étant construite de sorte que ledit membre (Mi) puisse prouver en signant le message (m) sa connaissance de ladite clé de signature secrète sans la divulguer,
et **caractérisé en ce que** ladite signature de groupe ($\sigma$) est construite de sorte que l'appartenance du membre (M$_l$) au groupe soit vérifiable indépendamment du pseudonyme (nym$_{ij}$),
**en ce que** la clé de signature secrète (sk$_i$) du membre (M$_i$) comprend au moins une première partie de clé (f$_i$) générée par les moyens de traitement du dispositif utilisateur dudit membre et inconnue de l'autorité de gestion des clés,
et ledit pseudonyme et ladite signature sont fonction d'une deuxième partie (xi) de ladite clé de signature secrète du membre (M$_i$), et sont construits de sorte à prouver que le membre identifié par le pseudonyme est le signataire du message (m) et **en ce que** ledit pseudonyme (nym$_{ij}$) du membre (M$_i$) est spécifique au domaine *(D$_j$).*

2. Procédé de signature selon la revendication précédente **caractérisé en ce que** ladite clé de signature secrète (ski) est stockée dans un moyen de stockage sécurisé.

3. Procédé de signature selon l'une quelconque des revendications précédentes **caractérisé en ce que** préalablement auxdites étapes de génération d'une signature de groupe et d'un pseudonyme, ledit procédé comprend une étape (E100) de génération de clés mise en oeuvre par un serveur de gestion de clés de l'autorité de gestion de clés, au cours de laquelle, des moyens de traitement du serveur de gestion :

   - génèrent pour le groupe de membres ($\mathcal{G}$) un ensemble de paramètres publics (gpk) (E101),
   - déterminent un paramètre de domaine (dpk$_j$) spécifique au domaine (D$_j$) (E102) et,
   - transmettent ce paramètre au fournisseur de service (SP$_j$) (E103).

4. Procédé de signature selon la revendication 3 **caractérisé en ce que** le paramètre de domaine (dpk$_j$) est égal à $g_1{}^{r_j}$, avec r$_j$ un entier et g1 un générateur d'un groupe G1, g1 étant un paramètre parmi l'ensemble de paramètres publics (gpk).

5. Procédé de signature selon la revendication 4 **caractérisé en ce que** l'entier r$_j$ est déterminé par l'autorité de gestion de clés.

6. Procédé de signature selon l'une quelconque des revendications 3 à 5 **caractérisé en ce que** ledit pseudonyme ($nym_{ij}$) du membre ($M_i$) dans le domaine ($D_j$) est fonction du paramètre de domaine ($dpk_j$) spécifique au domaine ($D_j$) déterminé par ledit serveur de gestion.

7. Procédé de contrôle d'une signature d'un message (m) et d'un pseudonyme mis en oeuvre par des moyens de traitement d'un serveur de contrôle, ladite signature ($\sigma$) et ledit pseudonyme ($nym_{ij}$) étant générés (E500) selon le procédé de l'une quelconque des revendications précédentes, comprenant une étape de vérification (E601), à partir de la signature ($\sigma$) et du pseudonyme ($nym_{ij}$), de la connaissance par le membre ($M_i$) de la clé de signature secrète ($sk_i$) et que ledit pseudonyme et ladite signature du membre ($M_i$) sont fonction d'une deuxième partie ($x_i$) de ladite clé de signature secrète, de sorte à prouver que le membre identifié par le pseudonyme est le signataire du message (m) et qu'il appartient au groupe de membres ($\mathcal{G}$) ;

8. Procédé de contrôle selon la revendication 7 **caractérisé en ce que** ladite étape de vérification comprend une étape de vérification de preuve lors de laquelle les moyens de traitement du serveur de contrôle vérifient qu'une preuve à divulgation nulle de connaissance prouvant que le membre identifié par le pseudonyme est le signataire du message (m) est correcte.

9. Procédé de contrôle selon la revendication 8 **caractérisé en ce que** le pseudonyme ($nym_{ij}$) est égal à $dpk_j^{x_i}$ avec $x_i$ ladite deuxième partie de clé de signature secrète du membre ($M_i$) et $dpk_j$ un paramètre de domaine spécifique au domaine, **en ce que** ladite signature ($\sigma$) comprend une valeur K, différente du pseudonyme ($nym_{ij}$), de la forme $B^{x_i}$ avec B un élément d'un groupe G1 et $x_i$ ladite deuxième partie de clé de signature secrète du membre ($M_i$), et **en ce que** ladite étape de vérification de preuve vérifie l'égalité des logarithmes discrets de la valeur K en base B et du pseudonyme $nym_{ij}$ en base $dpk_j$.

10. Procédé de contrôle selon l'une quelconque des revendications 8 à 9 **caractérisé en ce que** ladite étape de vérification comprend une vérification de ladite signature pour prouver l'appartenance du membre ($M_i$) au groupe et **en ce que** ladite étape de vérification de preuve est réalisée lors de la vérification de ladite signature.

11. Programme d'ordinateur comprenant des instructions de code de programme pour l'exécution des étapes du procédé selon l'une quelconque des revendications précédentes lorsque ledit programme est exécuté sur un ordinateur.

12. Dispositif utilisateur (201) comprenant au moins un moyen de stockage, un moyen de traitement et une interface de communication **caractérisé en ce qu'**il est configuré pour mettre en oeuvre un procédé selon l'une quelconque des revendications 1 à 6.

13. Serveur de contrôle (205s) comprenant au moins un moyen de stockage, un moyen de traitement et une interface de communication **caractérisé en ce qu'**il est configuré pour mettre en oeuvre un procédé selon l'une quelconque des revendications 7 à 10.

14. Système **caractérisé en ce qu'**il est comprend au moins un dispositif utilisateur (201) selon la revendication 12 et au moins un serveur de contrôle (205s) selon la revendication 13.

**Patentansprüche**

1. Signaturverfahren einer Nachricht (m), umgesetzt von Verarbeitungsmitteln einer Benutzervorrichtung eines zu einer Mitgliedergruppe ($\mathcal{G}$), die von einer Schlüsselverwaltungsautorität verwaltet wird, gehörenden Mitglieds ($M_i$), wobei die Benutzervorrichtung einen Geheimsignaturschlüssel ($sk_i$) besitzt, umfassend einen Erzeugungsschritt (E301) für die Nachricht (m) einer Gruppensignatur ($\sigma$), die es dem Mitglied ($M_i$) ermöglicht, seine Zugehörigkeit zur Mitgliedergruppe ($\mathcal{G}$) zu beweisen, und einen Erzeugungsschritt (E302) eines Pseudonyms ($nym_{ij}$), welches das Mitglied ($M_i$) in einem Bereich ($D_j$) eines Diensteanbieters ($SP_j$) identifiziert, wobei der Bereich eine Gruppe von Kommunikationsterminalen mit einem Server des Diensteanbieters umfasst, wobei die Gruppensignatur ($\sigma$) derart konstruiert ist, dass das Mitglied ($M_i$) bei Unterzeichnung der Nachricht (m) seine Kenntnis des Geheimsignaturschlüssels beweisen kann, ohne ihn zu offenbaren, und **dadurch gekennzeichnet, dass** die Gruppensignatur ($\sigma$) derart konstruiert ist, dass die Zugehörigkeit des Mitglieds ($M_i$) zur Gruppe unabhängig vom Pseudonym ($nym_{ij}$) verfifizierbar ist, und dass der Geheimsignaturschlüssel ($sk_i$) des Mitglieds ($M_i$) mindestens einen ersten Schlüsselteil ($f_i$), der von den Verarbeitungsmitteln der Benutzervorrichtung des Mitglieds verwaltet wird und der Schlüsselverwaltungsautorität unbekannt ist, umfasst, und das Pseudonym und die Signatur von einem zweiten Teil ($x_i$) des Geheimsignaturschlüssels des Mitglieds ($M_i$) abhängen und derart konstruiert sind, um zu beweisen, dass das von dem Pseudonym identifizierte Mitglied der Unterzeichner der Nachricht (m) ist,

und dass das Pseudonym ($nym_{ij}$) des Mitglieds ($M_i$) für den Bereich ($D_j$) spezifisch ist.

2. Signaturverfahren nach vorangehendem Anspruch, **dadurch gekennzeichnet, dass** der Geheimsignaturschlüssel ($sk_i$) in einem abgesicherten Speichermittel gespeichert ist.

3. Signaturverfahren nach einem der vorangehenden Ansprüche, **dadurch gekennzeichnet, dass** vor den Schritten der Erzeugung einer Gruppensignatur und eines Pseudonyms das Verfahren einen Schlüsselerzeugungsschritt (E100) umfasst, der von einem Schlüsselerzeugungsserver der Schlüsselverwaltungsautorität umgesetzt wird, bei dem Verarbeitungsmitteln des Verwaltungsservers:

   - für die Mitgliedergruppe ($\mathcal{G}$) eine Gruppe öffentlicher Parameter (gpk) (E101) generieren,
   - einen Bereichsparameter ($dpk_j$) bestimmen, der spezifisch für den Bereich ($D_j$) (E102) ist, und,
   - diesen Parameter an den Diensteanbieter ($SP_j$) (E103) übertragen.

4. Signaturverfahren nach Anspruch 3, **dadurch gekennzeichnet, dass** der Bereichsparameter ($dpk_j$) gleich $g_1{}^{rj}$ ist mit $r_j$ als Ganzzahl und g1 als Generator einer Gruppe G1, wobei g1 ein Parameter aus der Gruppe öffentlicher Parameter (gpk) ist.

5. Signaturverfahren nach Anspruch 4, **dadurch gekennzeichnet, dass** die Ganzzahl $r_j$ von der Schlüsselverwaltungsautorität bestimmt wird.

6. Signaturverfahren nach einem der Ansprüche 3 bis 5, **dadurch gekennzeichnet, dass** das Pseudonym ($nym_{ij}$) des Mitglieds ($M_i$) im Bereich ($D_j$) vom Bereichsparameter ($dpk_j$) abhängt, der spezifisch für den vom Verwaltungsserver bestimmten Bereich ($D_j$) ist.

7. Kontrollverfahren einer Signatur einer Nachricht (m) und eines Pseudonyms, das von Verarbeitungsmitteln eines Kontrollservers umgesetzt wird, wobei die Signatur ($\sigma$) und das Pseudonym ($nym_{ij}$) gemäß dem Verfahren nach einem der vorangehenden Ansprüche erzeugt (E500) werden, umfassend einen Überprüfungsschritt (E601) auf der Basis der Signatur ($\sigma$) und des Pseudonyms ($nym_{ij}$) der Kenntnis durch das Mitglied ($M_i$) des Geheimsignaturschlüssel ($sk_i$) und dass das Pseudonym und die Signatur des Mitglieds ($M_i$) von einem zweiten Teil ($x_i$) des Geheimsignaturschlüssel abhängen, um zu beweisen, dass das durch das Pseudonym identifizierte Mitglied der Unterzeichner der Nachricht (m) ist und dass es zu der Mitgliedergruppe ($\mathcal{G}$) gehört.

8. Kontrollverfahren nach Anspruch 7, **dadurch gekennzeichnet, dass** der Überprüfungsschritt einen Beweisüberprüfungsschritt umfasst, bei dem die Verarbeitungsmittel des Kontrollservers überprüfen, dass ein Null-Offenbarungs-Kenntnisbeweis, der beweist, dass das durch das Pseudonym identifizierte Mitglied der Unterzeichner der Nachricht (m) ist, richtig ist.

9. Kontrollverfahren nach Anspruch 8, **dadurch gekennzeichnet, dass** das Pseudonym ($nym_{ij}$) gleich $dpk_j{}^{xi}$ ist mit xi als zweiter Teil des Geheimsignaturschlüssels des Mitglieds ($M_i$) und $dpk_j$ als ein Parameter des spezifischen Bereichs des Bereichs und dass Signatur ($\sigma$) einen Wert K umfasst, der sich vom Pseudonym ($nym_{ij}$) unterscheidet, der Form B^xi mit B als Element der Gruppe G1 und xi als zweiter Geheimsignaturschlüssel des Mitglieds ($M_i$) und dass der Beweisüberprüfungsschritt die Gleichheit der diskreten Logarithmen des Werts K in Bank B und des Pseudonyms $nym_{ij}$ in Bank $dpk_j$ überprüft.

10. Kontrollverfahren nach einem der Ansprüche 8 bis 9, **dadurch gekennzeichnet, dass** der Überprüfungsschritt eine Überprüfung der Signatur umfasst, um die Zugehörigkeit des Mitglieds ($M_i$) zur Gruppe zu beweisen und dass der Beweisüberprüfungsschritt bei der Überprüfung der Signatur durchgeführt wird.

11. Rechnerprogramm, umfassend Programmcodeinstruktionen für die Ausführung der Schritte des Verfahrens nach einem der vorangehenden Ansprüche, wenn das Programm auf einem Rechner ausgeführt wird.

12. Benutzervorrichtung (201), umfassend mindestens ein Speichermittel, ein Verarbeitungsmittel und eine Kommunikationsschnittstelle, **dadurch gekennzeichnet, dass** sie konfiguriert ist, um ein Verfahren nach einem der Ansprüche 1 bis 6 umzusetzen.

13. Kontrollserver (205s), umfassend mindestens ein Speichermittel, ein Verarbeitungsmittel und eine Kommunikationsschnittstelle, **dadurch gekennzeichnet, dass** er konfiguriert ist, um ein Verfahren nach einem der Ansprüche 7 bis 10 umzusetzen.

14. System, **dadurch gekennzeichnet, dass** es mindestens eine Benutzervorrichtung (201) nach Anspruch 12 und mindestens einen Kontrollserver (205s) nach Anspruch 13 umfasst.

## Claims

1.  A method for signing a message (m) implemented by processing means of a user device of a member ($M_i$) belonging to a group of members ($\mathcal{G}$) managed by a key management authority, said user device having a secret signature key (ski), comprising a step of generating (E301) a group signature ($\sigma$) for the message (m) enabling said member ($M_i$) to prove his membership in the group of members ($\mathcal{G}$) and a step of generating (E302) a pseudonym ($nym_{ij}$) identifying the member ($M_i$) within a domain ($D_j$) of a service provider ($SP_j$), said domain comprising a set of terminals in communication with a server of said service provider, said group signature ($\sigma$) being designed such that said member ($M_i$) can prove, by signing the message (m), his knowledge of said secret signature key without disclosing it, and **characterized in that** said group signature ($\sigma$) is designed such that the membership of the member ($M_i$) in the group is verifiable independently of the pseudonym ($nym_{ij}$), **in that** the secret signature key ($sk_i$) of the member ($M_i$) comprises at least a fist part of key (fi) generated by the processing means of the user device of said member and unknown to the key management authority, and said pseudonym and said signature are a function of a second part ($x_i$) of said secret signature key of the member ($M_i$), and are designed so as to prove that the member identified by the pseudonym is the signatory of the message (m), and **in that** said pseudonym ($nym_{ij}$) of the member ($M_i$) is specific to the domain ($D_j$).

2.  The method for signing according to the preceding claim, **characterized in that** said secret signature key (ski) is stored in a secure storage means.

3.  The method for signing according to any one of the preceding claims, **characterized in that** prior to said steps of generating a group signature and a pseudonym, said method comprises a step (E100) of generating keys implemented by a key management server of the key management authority, during which, processing means of the management server:

    - generate for the group of members ($\mathcal{G}$) a set of public parameters (gpk) (E101),
    - determine a domain parameter ($dpk_j$) specific to the domain ($D_j$) (E102), and
    - transmit said parameter to the service provider ($SP_j$) (E103).

4.  The method for signing according to claim 3, **characterized in that** the domain parameter ($dpk_j$) is equal to $g_1^{r_j}$, with $r_j$ an integer and g1 a generator of a group G1, g1 being a parameter among the set of public parameters (gpk).

5.  The method for signing according to claim 4, **characterized in that** the integer $r_j$ is determined by the key management authority.

6.  The method for signing according to any one of claims 3 to 5, **characterized in that** said pseudonym ($nym_{ij}$) of the member ($M_i$) in the domain ($D_j$) is a function of the domain parameter *($dpk_j$)* specific to the domain *($D_j$)* determined by said management server.

7.  A method for controlling a signature of a message (m) and a pseudonym implemented by processing means of a control server, said signature ($\sigma$) and said pseudonym ($nym_{ij}$) being generated (E500) according to the method of any one of the preceding claims, comprising a step of verification (E601), from the signature ($\sigma$) and the pseudonym ($nym_{ij}$), of the knowledge by the member ($M_i$) of the secret signature key (ski) and that said pseudonym and said signature of the member ($M_i$) are a function of a second part ($x_i$) of said secret signature key, so as to prove that the member identified by the pseudonym is the signatory of the message (m) and that it belongs to the group of members ($\mathcal{G}$).

8.  The method for controlling according to claim 7, **characterized in that** said step of verification comprises a step of verification of proof during which the processing means of the control server verify that a zero knowledge proof proving that the member identified by the pseudonym is the signatory of the message (m) is correct.

9.  The method for controlling according to claim 8, **characterized in that** the pseudonym ($nym_{ij}$) is equal to $dpk_j^{xi}$ with xi said second part of secret signature key of the member ($M_i$) and $dpk_j$ a domain parameter specific to the domain, **in that** said signature ($\sigma$) comprises a value K, different to the pseudonym ($nym_{ij}$), of the form B^xi with B an element of a group G1 and xi said second part of secret signature key of the member ($M_i$), and **in that** said step of verification of proof verifies the equality of the discrete logarithms of the value K in base B and the pseudonym $nym_{ij}$ in base $dpk_j$.

10. The method for controlling according to any one of claims 8 to 9, **characterized in that** said step of verification comprises a verification of said signature to prove the membership of the member ($M_i$) in the group and **in that** said step of verification of proof is carried out during the verification of said signature.

11. A computer programme comprising programme code instructions for the execution of the steps of the method according to any one of the preceding claims, when said programme is executed on a computer.

12. A user device (201) comprising at least storage means, processing means and a communication interface **characterized in that** it is configured to implement a method according to any one of claims 1 to 6.

13. A control server (205s) comprising at least storage means, processing means and a communication interface **characterized in that** it is configured to implement a method according to any one of claims 7 to 10.

14. A system **characterized in that** it comprises at least one user device (201) according to claim 12 and at least one control server (205s) according to claim 13.

# FIG. 1

PACE

DocID

EAC-RI

T

SP

# FIG. 2

## FIG. 3

```
GENERATION DE CLES ─ E100

ADHESION ─ E200

SIGNATURE ─ E300
```

## FIG. 4

E100

```
GENERATION gpk, y ─ E101

GENERATION dpkj ─ E102

TRANSMISSION dpkj ─ E103

PUBLICATION gpk ─ E104
```

## FIG. 5

E200

GENERATION fi — E201

CALCUL Fi — E202

TRANSMISSION Fi — E203

GENERATION xi ET Ai — E204

TRANSMISSION xi ET Ai — E205

VERIFICATION xi ET Ai — E206

## FIG. 6

E300

GENERATION $\sigma$ — E301

GENERATION $nym_{ij}$ — E302

TRANSMISSION $nym_{ij}, \sigma$ — E303

## FIG. 7

E400

CREATION BD DE REVOCATION

E500

SIGNATURE

CONTROLE — E600

## FIG. 8

E600

VERIFICATION σ — E601

VERIFICATION REVOCATION — E602

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Domain-specific pseudonymous signatures for the german identity card. **BENDER, J. ; DAGDELEN, O. ; FISCHLIN, M. ; KUGLER, D.** ISC. Lecture Notes in Computer Science. Springer, 2012, vol. 7483, 104-119
- VLR group signatures - how to achieve both backward unlinkability and efficient revocation checks. **BRINGER, J. ; PATEY, A.** SECRYPT. 2012, 215-220
- **DAVID CHAUM ; EUGÈNE VAN HEYST.** Group Signatures. *EUROCRYPT,* 1991, 257-265
- **DAN BONEH ; HOVAV SHACHAM.** Group signatures with verifier-local revocation. *ACM Conference on Computer and Communications Security,* 2004, 168-177
- **BRINGER J. ; PATEY A.** VLR group signatures - how to achieve both backward unlinkability and efficient revocation checks. *SECRYPT,* 2012, 215-220
- An application of the Boneh and Shacham group signature scheme to biometric authentication. **BRINGER, J. ; CHABANNE, H. ; POINTCHEVAL, D. ; ZIMMER, S.** IWSEC. Lecture Notes in Computer Science. Springer, 2008, vol. 5312, 219-230
- **BRINGER, J. ; PATEY, A.** VLR group signatures - how to achieve both backward unlinkability and efficient revocation checks. *SECRYPT,* 2012, 215-220
- A short verifier-local revocation group signature scheme with backward unlinkability. **NAKANISHI, T. ; FUNABIKI, N.** IWSEC. Lecture Notes in Computer Science. Springer, 2006, vol. 4266, 17-32